Europäisches Patentamt

European Patent Office

Office européen des brevets

(19)

(11) Veröffentlichungsnummer: **0 158 871 B1**

# EUROPÄISCHE PATENTSCHRIFT

(12)

(45) Veröffentlichungstag der Patentschrift: 17.04.91

(51) Int. Cl.5: **C08L 63/00**, //(C08L63/00, 61:06)

(21) Anmeldenummer: 85103459.5

(22) Anmeldetag: 23.03.85

(54) Mischung zur Herstellung von säurefesten Dichtungen und Imprägnierungen, Verfahren zu ihrer Herstellung sowie ihre Verwendung.

(30) Priorität: 31.03.84 DE 3412095

(43) Veröffentlichungstag der Anmeldung:
23.10.85 Patentblatt 85/43

(45) Bekanntmachung des Hinweises auf die
Patenterteilung:
17.04.91 Patentblatt 91/16

(84) Benannte Vertragsstaaten:
AT BE CH DE FR GB IT LI NL SE

(56) Entgegenhaltungen:
EP-A- 0 026 809      EP-A- 0 077 683
CH-A- 465 218        DE-A- 1 172 848
DE-A- 1 494 099      DE-A- 1 520 062
DE-A- 2 647 851      FR-A- 2 439 799
FR-A- 2 451 384      GB-A- 1 570 482
GB-A- 2 025 998      US-A- 2 876 208

Fachlexicon ABC Chimie, Bd.1,2 Aüfl.(1976),
S. 677 "Kitte"

(73) Patentinhaber: HOECHST AKTIENGESELL-
SCHAFT
Postfach 80 03 20
W-6230 Frankfurt am Main 80(DE)

(72) Erfinder: Hesse, Wolfgang, Dr.
Rossbachhöhe 42
W-6204 Taunusstein(DE)
Erfinder: Rauhut, Klaus, Dr.
Pfingstbornstrasse 13
W-6200 Wiesbaden(DE)

## Beschreibung

Die Erfindung betrifft säurefeste, Phenolharz enthaltende Dichtungen und Imprägnierungen, wie sie beispielsweise als Kitte im Säurebau oder bei der Herstellung von dichten, ursprünglich porösen Formkörpern aus Kohlenstoff, keramischen Material oder Sintermetallen eingesetzt werden.

Es ist bekannt, Phenolharze vom Resoltyp als Bindemittel für säurehärtende Kitte zu verwenden. Als weitere Komponente des Kittes werden gewöhnlich Kittmehle eingesetzt, die im wesentlichen aus inerten Füllstoffen bestehen und die die zur Härtung benötigten Katalysatoren in Form von Säuren und/oder säureabspaltenden Substanzen und gegebenenfalls weitere Zusatzstoffe, wie Farbstoffe, enthalten.

Bei der Verwendung als Imprägniermittel wird auf Füllstoffe verzichtet und die Härtung in diesem Falle durch Wärme, gegebenenfalls in Gegenwart von Katalysatoren durchgeführt.

Sehr nachteilig ist die Tatsache, daß den bekannten Produkten auf Basis der Phenolresole die Alkalifestigkeit, besonders aber die Frühalkalifestigkeit nach ihrer Härtung bei Raumtemperatur fehlt. Unter "Frühalkalibeständigkeit" versteht man die Beständigkeit der Verkittungen gegenüber Alkali zu einem möglichst frühen Zeitpunkt, um die behandelten oder erzeugten Gegenstände möglichst schnell in Gebrauch nehmen zu können. Dieser Nachteil ist durch die Struktur der Phenolharze bedingt und beruht auf ihrer Alkalilöslichkeit bzw. derjenigen ihrer nicht genügend vernetzten Härtungsprodukte. Diese wird bekanntlich geringer, wenn die phenolische Hydroxylgruppen vollständig oder weitgehend veräthert werden. Die Verätherung kann mit Epoxidverbindungen durch Umsetzung mit Alkyl- oder Alkenhalogeniden nach der Williamson-Synthese oder mit Dialkylsulfaten oder Diazomethan geschehen. Die bekanntgewordenen Verfahren zielen auf eine vollständige oder weitgehende Umsetzung der phenolischen Hydroxylgruppe ab, eignen sich aber nicht für säurehärtende Kitte, weil derart verätherte Resole bei Raumtemperatur auch in Gegenwart hoher Säurekonzentration nicht mehr aushärten.

Es ist ferner bekannt, aus Phenol, Alkylphenol und Formaldehyd Mischkondensate mit hohem Kondensationsgrad in Gegenwart von Katalysatoren herzustellen. Diese eignen sich jedoch nicht als Kittharze; sie können z.B. wegen ihres hohen Gehaltes an basischen Stoffen nicht mit Säuren gehärtet werden oder sind infolge Fehlens reaktiver Gruppen nicht härtbar.

Es ist auch bekannt, Mischungen aus methyloliertem Phenol und methylolierten Alkylphenolen in annähernd äquivalenten Verhältnissen gemeinsam zu härten. Diese Produkte sind aber selbst in Gegenwart von Säuren nur in der Hitze härtbar und erfordern beim Einsatz als Kittharz Mindesttemperaturen von 120° C.

Es wird auch die Herstellung von Resolen aus Umsetzungsprodukten von Phenol mit Styrol und Formaldehyd beschrieben. Diese Harze sind wasserlöslich, aber stark alkalihaltig. Sie eignen sich deshalb nicht als Kittharze.

Es ist ferner bekannt, Phenolresole mit Furfurol und niedrigmolekularen flüchtigen alkylierenden Reagenzien zu versetzen, wobei unter dem Begriff "alkylierend" auch die Einführung von Alkylderivaten wie Epichlorhydrin und Dichlorhydrin verstanden wird, um durch Blockierung der phenolischen Hydroxylgruppen die Alkaliempfindlichkeit zu beheben. Diesem Verfahren haftet aber der Nachteil an, daß diese blockierenden Stoffe starke Gewerbegifte darstellen und daher, besonders in Anbetracht der meist nach handwerklichen Methoden erfolgenden Anwendung, möglichst zu vermeiden sind. Außerdem neigen die daraus hergestellten Kitte zu Ausblühungen, die aus Natriumchlorid bestehen.

Aus der DE-PS 2.411.297 ist bekannt, Resole auf Basis von Mischungen aus Alkylphenolen und Phenol partiell zu alkylieren und so alkalibeständigere Kitte zu erhalten. Bei diesen Kitten wird aber die Verbesserung der Alkalibeständigkeit durch die Verschlechterung der Lösemittelbeständigkeit erkauft, was sich in der Oberflächenrauhigkeit der mit Lösemittel in Kontakt gebrachten Kitte äußert.

Aus der DE-OS 28 39 221 sind schließlich Überzugsmassen aus Epoxid- und Phenolresolharzen bekannt, die übliche organische Härtungsmittel für Epoxidharze enthalten können und die bei hoher Temperatur von mindestens etwa 180° C rasch härten. Die Verwendung derartiger Massen für säurehärtende Kitte ist aber nicht angeführt.

Da die bisher bekannten, für die Herstellung von säurehärtenden Kitten einsetzbaren Phenolharze meist nur ungenügende technologische Eigenschaft aufweisen, insbesondere eine ungenügende Alkalibeständigkeit zeigen und ein Nachschrumpfen des aushärtenden Kittes erleiden, liegt der Erfindung die Aufgabe zugrunde, Phenolharzkitte und Imprägnierlösungen zu entwickeln, die keine flüchtigen und alkylierend wirkende reaktiven Verdünner wie Epichlorhydrin und/oder Dichlorhydrin enthalten.

Es sollen aber die guten Eigenschaften, die die bisher verwendeten Phenolharzkitte aufweisen können, z.B. Beständigkeit gegen Lösemittel und gegen nicht bzw. schwach oxidierende Säuren, vor allem eine geringe Nachschwindung nach der Verarbeitung, erhalten bleiben. Die letzte Eigenschaft ist außerordentlich wichtig, da durch sie erst die Anwendung der Phenolharzkitte zur Herstellung von säurefesten Plattenbelägen und Ausmauerungen oder dichten Imprägnierungen ermöglicht wird.

Gegenstand der Erfindung ist eine Mischung zur Herstellung von säurefesten Dichtungen oder säurefesten Imprägnierungen auf der Grundlage von Epoxidharzen, Resolen, Härtungskatalysatoren und weiteren üblichen Zusätzen, die dadurch gekennzeichnet ist, daß sie als Kitt- oder Imprägnierlösungen vorliegen und als wesentliche Bestandteile

A) mindestens ein bifunktionelles, niedrig molekulares Epoxidharz mit einem Epoxidäquivalentgewicht zwischen 87 und 1000,
B) mindestens ein Resol aus mindestens einem trifunktrionellen Phenol und Formaldehyd im Molverhältnis von 1:1 bis 1:3, vorzugsweise 1:1,3 bis 1:2,5, einer Viskosität zwischen 50 und 2500 mPa·s/20°C und einem Festoffgehalt von mindestens 50 Gew.-%
C) Härtungskatalysatoren, wobei Kitte zusätzlich noch
D) Füllstoffe im Gewichtsverhältnis von 1:1 bis 1:7, bezogen auf die Summe der Komponenten A) bis C), wobei B) jeweils als 100%iges Resol berechnet ist, enthalten.

Ein weiterer Gegenstand ist auch ein Verfahren zur Herstellung von Härtungsprodukten aus den genannten Mischungen, wobei die Mischungen bei Temperaturen zwischen 10 und 170°C gehärtet werden.

Die erfindungsgemäß hergestellten säurefesten Kitte oder säurefesten Imprägnierungen weisen gute Alkalibeständig keiten auf und sind hervorragend gegen Lösungsmittel, schwach oxidierende sowie nicht oxidierende Säuren beständig. Sie neigen nicht oder nur in sehr geringem Maße zum Nachschwinden.

Die verwendeten, niedermolekularen Epoxidharze A) sind im allgemeinen flüssig und haben ein Epoxidäquivalentgewicht von 87 bis 1000, vorzugsweise 150 bis 500. Bevorzugt sind Epoxidharze, die durch Umsetzung von Epichlorhydrin beziehungsweise Dichlorhydrin mit Bisphenolen wie Diphenylolmethan und/oder Diphenylolpropan erhalten werden. Unter "Epoxidharze" sind auch nieder- und höhermolekulare Verbindungen auf Basis von mehrwertigen Alkoholen z.B. Äthylen-, 1,2-Propylen- und 1,2-Butylenglykol und anderen aliphatischen Verbindungen z.B. von ungesättigten Verbindungen wie Dienen, fetten Ölen oder Polymerölen zu verstehen.

Als Resole B) kommen solche aus trifunktionellen Phenolen, wie den verschiedenen Kresolen, Xylenolen, vorzugsweise aber dem unsubstituierten Phenol, $C_6H_5OH$, einzeln oder im Gemisch, und Formaldehyd in Betracht, wobei das Molverhältnis von Phenolkomponente(n) zu Formaldehyd 1:1 bis 1:3, vorzugsweise 1:1,3 bis 2,5 beträgt. Der Formaldehyd kann in Form seiner wäßrigen Lösungen und/oder als Paraformaldehyd verwendet werden.

Die Reaktion der beiden Komponenten wird im allgemeinen bei 30 bis 100, vorzugsweise 40 bis 80°C in Gegenwart eines alkalisch wirkenden Katalysators durchgeführt. Die Resole liegen als wäßrige Lösungen bzw. als Schmelzen mit einem Festharzgehalt von mindestens 50, vorzugsweise über 60 Gew.-% vor, wobei ihre Viskosität zwischen 50 und 2500, vorzugsweise mindestens 350 mPa.s/20°C beträgt, möglichst aber 2000 mPa.s/20°C nicht überschreiten soll. Als Katalysator für die Herstellung der Resole dienen Basen oder basische Salze, vorzugsweise jedoch die Oxide oder Hydroxide der Metalle aus der ersten oder zweiten Hauptgruppe des periodischen Systems, besonders aber Natrium- oder Kaliumhydroxid. Der Katalysator kann nach der Reaktion mit einer Säure, die im Harz lösliche Salze bildet, neutralisiert werden. Hierfür eignen sich besonders organische Säuren aliphatischer Natur, z.B. Ameisensäure, Essigsäure, Milchsäure, Gluconsäure und Maleinsäure. Die Komponente B), bezogen auf 100%iges Resol, wird im allgemeinen im Gewichtsverhältnis der Komponenten A) zu B) von 1:99 bis 30:70, vorzugsweise von 5:95 bis 20:80 zugegeben.

Härtungskatalysatoren C) sind beispielsweise anorganische Säuren wie Schwefelsäure, Salzsäure, Phosphorsäure und Sulfonsäuren wie Toluol- und Naphthalinsulfonsäure, deren Chloride und Ester, z.B. mit 1 bis 12 C-Atomen in der Estergruppe, insbesondere von einwertigen Alkoholen aliphatischer Natur und die sauren Schwefelsäureester dieser Alkohole. Saure Salze z.B. Alkylibisulfate sowie Gemische der angeführten Substanzen können in gleicher Weise eingesetzt werden. Die weniger reaktiven bzw. unter schärferen Bedingungen wirkenden Verbindungen stellen latente Katalysatoren dar.

Füllstoffe D) sind z.B. Koks, Kunstgraphit, Quarz und/oder Bariumsulfat. Als übliche Zusätze können beispielsweise farbgebende Stoffe z.B. Pigmente zugesetzt werden.

Die Einsatzmenge der Härtungskatalysatoren C) ist 0,05 bis 10, vorzugsweise 0,2 bis 5 Gew.-%, bezogen auf die Summe der Komponenten A) bis C). Füllstoffe werden vorzugsweise im Gewichtsverhältnis von 1:1,5 bis 1:5 eingesetzt, bezogen auf die Summe der Komponenten A) bis C) zu Füllstoff, wobei in jedem Falle auf 100%iges Resol als Komponente B) bezogen wird. Die Härtungstemperatur der Mischungen liegt in Abhängigkeit vom Verwendungszweck zwischen 10 und 170°C.

Die Herstellung der Kitte geschieht zweckmäßig, indem man unmittelbar vor der Anwendung die Mischung des Resols und des Epoxidharzes mit einem Kittmehl, das aus Härtungskatalysator C) und Füllstoff D) besteht, vermischt. Der erhaltene Kitt wird dann auf oder zwischen die zu verkittenden Materialien gebracht und sofort nach üblichen Methoden verarbeitet, wobei die Härtung im allgemeinen bei Temperaturen jeweils zwischen 10 und 120, vorzugsweise 10 und 80, insbesondere aber zwischen 15 und 35°C erfolgt.

Für die Verwendung als Imprägniermittel werden die Harzlösungen vorzugsweise mit latenten Katalysatoren wie neutralen Estern starker Säuren, z.B. Toluolsulfonsäureäthylester, versetzt. Das zu imprägnierende, poröse Formteil, z.B. aus Graphit, Keramik oder Sintermetall, wird mit der Harzlösung getränkt und auf Temperaturen von 130 bis 170, vorzugsweise 130 bis 160°C erhitzt. Dabei findet die Vernetzung des Harzanteils statt, die zu einem Verschließen der Hohlräume des porösen Materials führt und dichte Formteile ergibt.

Zur Bewertung der Güte eines Kittes sind die Eigenschaften der Resole vor dem Mischen mit dem Kittmehl und die Eigenschaften des Kittes nach dem Mischen, der Verlauf der Härtung und die chemischen und physikalischen Eigenschaften des Endproduktes maßgebend. Das Resol soll einen niedrigen Kondensationsgrad und eine niedrige Viskosität haben, so daß eine gute Benetzung des Füllstoffes auch nach einer langen Lagerung gewährleistet ist. Ebenso soll sich der Kondensationsgrad des Resols während der Lagerung nicht oder nur unwesentlich erhöhen, so daß eine gute Benetzbarkeit des Füllstoffes erhalten bleibt und die Lagerbeständigkeit gut ist. Anderenfalls können Verarbeitungsfehler auftreten. Nach dem Mischen des Kittmehls mit dem Resol setzt infolge der durch den Härter erwirkten Reaktion sofort eine Vergrößerung des Phenolharzmoleküles unter Einschluß der Epoxidverbindung ein, die schließlich zu einem völligen Verlust der Verarbeitungskonsistenz führt. Die zwischen Anrühren des Kittes und diesem Verlust liegende Zeit, die sogenannte Verarbeitungszeit, soll einen so großen Zeitraum umfassen, daß eine bequeme Verarbeitung möglich ist, und etwa eine halbe bis 1 Stunde betragen. Nach der Verarbeitung soll der Kitt möglichst bald bei Raumtemperatur unter geringer Linearschwindung erhärtet sein und eine ausreichende, sich steigernde Beständigkeit gegen Chemikalien entwickeln, so daß er als chemikalienbeständiger Kitt verwendet werden kann.

In dem folgenden Beispiel bedeutet T Gewichtsteile und % Gewichtsprozent

Beispiel

a) Herstellung des Resols In einer Apparatur, die mit Rührer und Thermometer versehen ist, wurden 1880 T Phenol geschmolzen, mit 98 T wäßriger Natronlauge (33 %ig) versetzt und auf 60°C abgekühlt. Bei dieser Temperatur wurden nach Maßgabe der exothermen Reaktion innerhalb von etwa 2 Stunden 336 T wäßriger Formaldehyd (37 %ig) und 770 T Paraform-aldehyd (91 %ig) zugegeben. Nach 9 Stunden wurde eine Viskosität von 850 mPa.s/20°C erreicht, Rückstand 81,5 % (1 Stunde /135°C). Zu den im Reaktionsgefäß befindlichen 3084 T der Harzlösung wurden 281 T des technischen Diglycidyläthers des 4,4'-Diphenylolpropans (Epoxydäqui valent 190) sowie 96 T destilliertes Wasser gegeben. Die erhaltene Harzlösung hatte einen Rückstand von 79,9 % (1 Stunde / 135°C), eine Viskosität von 800 mPa.s/20°C und ließ sich im Verhältnis von 1:0,4 mit Wasser verdünnen. Ausbeute: 3461 T.

b) Herstellung des Kittes Aus 92 T Kohlenstoff (Graphit-Mehl) und 4 T p-Toluolsulfochlorid, 1,5 T Naphthalindisulfonsäure und 1 T Natriumbisulfat wurde ein Kittmehl hergestellt, von dem 100 T mit 70 T der Harzlösung zu einem Kitt vermischt wurden. Der so hergestellte Kitt hatte bei 20°C eine Gebrauchsdauer (Verarbeitungszeit) von ca. 60 Minuten. Nach 24 Stunden bei dieser Temperatur wurde eine Shore-Härte D von 50 erreicht.

c) Chemische Prüfung Für die Prüfung der chemischen Beständigkeit wurden aus dem Kitt zylindrische Prüfkörper mit einer Höhe und einem Durchmesser von jeweils 25 mm hergestellt und diese 8 Tage lang bei Raumtemperatur gelagert. Nach der anschließenden Einlagerung der Prüfkörper während 40 Stunden in siedenden Medien, z.B. Schwefelsäure 20%ig und 70%ig, Salzsäure, Essigsäure, Chloroform, Toluol und Butylacetat, erwiesen sie sich als beständig.

d) Physikalische Prüfung Die Messung der Linearschwindung in Anlehnung an ASTM C 358 erfolgte an zylindrischen Prüfkörpern mit 25 mm Durchmesser und 90 mm Länge. Die erste Längenmessung erfolgte 24 Stunden nach Herstellung der Prüfkörper und diente als Ausgangswert. Innerhalb eines Beobachtungszeitraumes von 42 Tagen betrug die Linearschwindung bei Raumtemperatur 0,15 %.

**Ansprüche**

1.   Mischung zur Herstellung von säurefesten Dichtungen oder säurefesten Imprägnierungen auf der Grundlage von Epoxidharzen, Resolen, Härtungskatalysatoren und weiteren üblichen Zusätzen, dadurch gekennzeichnet, daß sie als Kitt oder Imprägnierlösungen vorliegen und als wesentliche Bestandteile

    A) mindestens ein bifunktionelles, niedrigmolekulares Epoxidharz mit einem Epoxidäquivalentgewicht zwischen 87 und 1000,

B) mindestens ein Resol aus mindestens einem trifunktionellen Phenol und Formaldehyd im Molverhältnis von 1:1 bis 1:3, einer Viskosität zwischen 50 und 2500 $mPa \cdot s/20°C$ und einem Feststoffgehalt von mindestens 50 Gew.-%,

C) Härtungskatalysatoren, wobei Kitte zusätzlich noch

D) Füllstoffe im Gewichtsverhältnis von 1:1 bis 1:7, bezogen auf die Summe der Komponenten A) bis C) zu Füllstoff, wobei B) jeweils als 100%iges Resol berechnet ist, enthalten.

2. Ausführungsform nach Anspruch 1, dadurch gekennzeichnet, daß das Molverhältnis in der Komponenten B) 1:1,3 - 2,5 beträgt.

3. Ausführungsform nach Ansprüchen 1 oder 2, dadurch gekennzeichnet, daß das Gewichtsverhältnis der Komponenten A) zu B) 1:99 bis 30:70, vorzugsweise 5:95 bis 20:80 beträgt, bezogen auf 100%iges Resol.

4. Ausführungsform nach einem oder mehreren der Ansprüche 1 bis 3, dadurch gekennzeichnet, daß der Anteil der Komponente C) 0,05 bis 10, vorzugsweise 0,2 bis 5 Gew.-%, berechnet auf die Summe der Komponente A) bis C) beträgt und daß gegebenenfalls Füllstoffe im Gewichtsverhältnis aus der Summe der Komponenten A) bis C) zu Füllstoff von 1:1 bis 1:7, vorzugsweise 1:1,5 bis 1:5 enthalten sind, wobei B) jeweils als 100%iges Resol berechnet ist.

5. Ausführungsform nach einem oder mehreren der Ansprüche 1 bis 4, dadurch gekennzeichnet, daß als Härtungskatalysatoren anorganische Säuren, saure Salze, Sulfonsäuren, deren Chloride und/oder Ester eingesetzt werden, wobei die Ester 1 bis 12 C-Atome in der Estergruppe aufweisen.

6. Verfahren zur Herstellung von Härtungsprodukten unter Verwendung von Mischungen nach einem oder mehreren der Ansprüche 1 bis 5, dadurch gekennzeichnet, daß man die Mischungen bei Temperaturen zwischen 10 und 170 °C härtet, wobei die als Imprägnierlösung vorliegenden Mischungen vor der Härtung auf poröse Formteile aufgebracht werden.

7. Verfahren nach Anspruch 6, dadurch gekennzeichnet, daß die Härtungstemperatur bei Kitten zwischen 10 und 120, vorzugsweise zwischen 10 und 80, insbesondere zwischen 15 und 35 °C liegt.

8. Verfahren nach Anspruch 6, dadurch gekennzeichnet, daß die Härtungstemperatur bei Imprägnierlösungen zwischen 130 und 170 °C, vorzugsweise 130 bis 160 °C, liegt und für die Härtung als Komponente C) latente Härter eingesetzt werden.

9. Nach dem Verfahren gemäß Ansprüchen 6 und 8 hergestellte dichte, ursprünglich poröse Formteile aus Graphit, Keramik oder Sintermetall.

Patentansprüche für folgenden Vertragsstaat: AT

1. Verfahren zur Herstellung von säurefesten Härtungsprodukten unter Verwendung von Imprägnierlösungen oder Kitten auf Basis von Mischungen aus Epoxidharzen, Resolen, Härtungskatalysatoren und gegebenenfalls Füllstoffen, dadurch gekennzeichnet, daß Mischungen aus

A) mindestens einem bifunktionellen, niedrigmolekularen Epoxidharz mit einem Epoxidäquivalentgewicht zwischen 87 und 1000 und

B) mindestens einem Resol aus mindestens einem trifunktionellen Phenol und Formaldehyd im Molverhältnis von 1:1 bis 1:3, dessen Viskosität zwischen 50 und 2500 $mPa \cdot s/20°C$ liegt und dessen Feststoffgehalt mindestens 50 Gew.-% beträgt, mit

C) einem Härtungskatalysator versetzt werden, wobei Kitten zusätzlich noch

D) Füllstoffe im Gewichtsverhältnis von 1:1 bis 1:7, bezogen auf die Summe der Komponenten A) bis C), wobei B) jeweils als 100%iges Resol berechnet ist, zugegeben werden und diese Mischungen bei Temperaturen zwischen 10 und 170 °C gehärtet werden, wobei die als Imprägnierlösung vorliegenden Mischungen vor der Härtung auf poröse Formteile aufgebracht werden

2. Verfahren nach Anspruch 1, dadurch gekennzeichnet, daß das Molverhältnis in der Komponente B) 1:1,3 - 2.5 beträgt.

3. Verfahren nach Anspruch 1 oder 2, dadurch gekennzeichnet, daß das Gewichtsverhältnis der Komponenten A) zu B) 1:99 bis 30 70, vorzugsweise 5:95 bis 20:80 beträgt, bezogen auf 100%iges Resol.

4. Verfahren nach einem oder mehreren der Ansprüche 1 bis 3, dadurch gekennzeichnet, daß der Anteil der Komponente C) 0,05 bis 10, vorzugsweise 0,2 bis 5 Gew.-%, berechnet auf die Summe der Komponenten A) bis C) beträgt und daß gegebenenfalls Füllstofe D) im Gewichtsverhältnis aus der Summe der Komponenten A) bis C) zu Füllstoff von 1:1,5 bis 1:5 enthalten sind, wobei B) jeweils als 100%iges Resol berechnet ist.

5. Verfahren nach einem oder mehreren der Ansprüche 1 bis 4, dadurch gekennzeichnet, daß die Härtungstemperatur bei Kitten zwischen 10 und 120, vorzugsweise zwischen 10 und 80, insbesondere zwischen 15 und 35°C liegt.

6. Verfahren nach einem oder mehreren der Ansprüche 1 bis 5, dadurch gekennzeichnet, daß die Härtungstemperatur bei Imprägnierlösungen zwischen 130 und 170°C, vorzugsweise 130 bis 160°C, liegt und für die Härtung als Komponente C) latente Härter eingesetzt werden.

7. Verfahren nach einem oder mehreren der Ansprüche 1 bis 6, dadurch gekennzeichnet, daß als Härtungskatalysator anorganische Säuren, saure Salze, Sulfonsäuren, deren Chloride und/oder Ester eingesetzt werden, wobei die Ester 1 bis 12 C-Atome in der Estergruppe aufweisen.

## Claims

1. A mixture for the production of acid-resistant sealing materials or acid-resistant impregnating materials based on epoxy resins, resols, hardening catalysts and further customary additives, wherein these are in the form of cements or impregnating solutions and contain, as essential constituents
   A) at least one bifunctional, low-molecular epoxy resin having an epoxide equivalent weight between 87 and 1,000,
   B) at least one resol formed from at least one trifunctional phenol and formaldehyde in a molar ratio of 1 : 1 to 1 : 3, having a viscosity between 50 and 2,500 mPa.s at 20°C and having a solids content of at least 50 % by weight, and
   C) hardening catalysts, cements additionally containing
   D) fillers in a ratio by weight of 1 : 1 to 1 : 7, based on the sum of components A) to C), B) being calculated in each case as 100 % strength resol.

2. An embodiment as claimed in claim 1, wherein the molar ratio in component B) is 1 : 1.3 to 2.5.

3. An embodiment as claimed in claim 1 or 2, wherein the ratio by weight of components A) to B) is 1 : 99 to 30 : 70, preferably 5 : 95 to 20 : 80, based on 100 % strength resol.

4. An embodiment as claimed in one or more of claims 1 to 3, wherein the proportion of the component C) is 0.05 to 10, preferably 0.2 to 5, % by weight, calculated in relation to the sum of the components A) to C), and, if appropriate, fillers are present in a ratio by weight based on the sum of the components A) to C) in relation to the filler of 1 : 1 to 1 : 7, preferably 1 : 1.5 to 1 : 5, B) being clculated in each case as 100 % strength resol.

5. An embodiment as claimed in one or more of claims 1 to 4, wherein the hardening catalysts employed are inorganic acids, acid salts, sulfonic acids or the chlorides and/or esters thereof, the esters having 1 to 12 carbon atoms in the ester group.

6. A process for the production of hardening products, using mixtures as claimed in one or more of claims 1 to 5, wherein the mixtures are hardened at temperatures between 10 and 170°C, the mixtures in the form of an impregnating solution being applied to porous shaped articles prior to hardening.

7. The process as claimed in claim 6, wherein the hardening temperature in the case of cements is between 10 and 120°C, preferably between 10 and 80°C and especially between 15 and 35°C.

8. The process as claimed in claim 6, wherein the hardening temperature in the case of impregnating solutions is between 130 and 170°C, preferably 130 to 160°C, and for hardening as component C) latent hardeners are used.

9. Impervious, initially porous shaped articles composed of graphite, ceramics or sintered metal which have been produced according to the process as claimed in claims 6 and 8.

Claims for the following Contracting State: AT

1. A process for the production of acid-resistant hardening products, using impregnating solutions or cements based on mixtures composed of epoxy resins, resols, hardening catalysts and, if appropriate, fillers, wherein mixtures of
   A) at least one bifunctional, low-molecular epoxy resin having an epoxide equivalent weight between 87 and 1,000 and

B) at least one resol formed from at least one trifunctional phenol and formaldehyde in a molar ratio of 1 : 1 to 1l: 3, having a viscosity between 50 and 2,500 mPa.s at 20 °C and having a solids content of at least 50 % by weight are mixed with

C) a hardening catalysts, cements being additionally mixed with

D) fillers in a ratio by weight of 1 : 1 to 1 : 7, based on the sum of components A) to C), B) being calculated in each case as 100 % strength resol and these mixtures are hardened at temperatures between 10 and 170 °C, the mixtures in the form of impregnating solutions being applied to porous shaped articles prior to hardening.

2. The process as claimed in claim 1, wherein the molar ratio in component B) is 1 : 1.3 to 2.5.

3. The process as claimed in claim 1 or 2, wherein the ratio by weight of components A) to B) is 1 : 99 to 30 : 70, preferably 5 : 95 to 20 : 80, based on 100 % strength resol.

4. The process as claimed in one or more of claims 1 to 3, wherein the proportion of the component C) is 0.05 to 10, preferably 0.2 to 5, % by weight, calculated in relation to the sum of the components A) to C), and, if appropriate, fillers D) are present in a ratio by weight based on the sum of the components A) to C) in relation to the filler of 1 : 1.5 to 1 : 5, B) being clculated in each case as 100 % strength resol.

5. The process as claimed in one or more of claims 1 to 4, wherein the hardening temperature in the case of cements is between 10 and 120 °C, preferably between 10 and 80 °C and especially between 15 and 35 °C.

6. The process as claimed in one or more of claim 1 to 5, wherein the hardening temperature in the case of impregnating solutions is between 130 and 170 °C, preferably 130 to 160 °C, and for hardening as component C) latent hardeners are used.

7. The process as claimed in one or more of claims 1 to 6, wherein the hardening catalysts employed are inorganic acids, acid salts, sulfonic acids or the chlorides and/or esters thereof, the esters having 1 to 12 carbon atoms in the ester group.

**Revendications**

1. Mélange destiné à la fabrication d'étanchéités résistant aux acides ou d'imprégnations résistant aux acides, à base de résines époxydes, de résols, de catalyseurs de durcissement et d'autres additifs usuels, caraotérisé en ce qu'elles se présentent sous forme de mastic ou de solutions d'imprégnation, et contiennent comme constituants principaux :

A) au moins une résine époxyde bifonctionnelle, à faible masse moléculaire, ayant une masse équivalente d'époxyde de 87 à 1000,

B) au moins un résol constitué d'au moins un phénol trifonctionnel et de formaldéhyde selon une proportion molaire de 1:1 à 1:3, présentant une viscosité de 50 à 2500 mPa.s/20 °C et un extrait sec d'au moins 50 % en poids,

C) des catalyseurs de durcissement, les mastics contenant en outre encore

D) des charges, selon une proportion pondérale de 1:1 à 1:7 par rapport au total des composants A) à C), B) étant dans chaque cas calculé comme un résol à 100 %.

2. Mélange selon la revendication 1, caractérisé en ce que la proportion molaire, dans le composant B), est de 1:1,3-2,5.

3. Mélange selon les revendications 1 ou 2, caractérisé en ce que la proportion pondérale des composants A) à B) est de 1:99 à 30:70, de préférence de 5:95 à 20:80, par rapport à du résol à 100 %.

4. Mélange selon l'une ou plusieurs des revendications 1 à 3, caractérisé en ce que la quantité du composant C) est de 0,05 à 10, de préférence de 0,2 à 5 % en poids, calculée par rapport à la somme des composants A) à C), et qu'il contient éventuellement des charges selon une propor tion pondérale, entre le total des composants A) à C) et la charge, de 1:1 à 1:7, de préférence de 1:1,5 à 1:5, B) étant toujours calculé en tant que résol à 100 %.

5. Mélange selon l'une ou plusieurs des revendications 1 à 4, caractérisé en ce qu'on utilise comme catalyseurs de durcissement des acides inorganiques, des sels acides, des acides sulfoniques, leurs chlorures et/ou esters,les esters ayant de 1 à 12 atomes de carbone dans le groupe ester.

6. Procédé de préparation de produits de durcissement par utilisation de mélanges selon une ou plusieurs des revendications 1 à 5, caractérisé en ce qu'on durcit des mélanges à des températures de 10 à 170°C, les mélanges présents en tant que solution d'imprégnation étant appliqués sur des objets moulés poreux avant le durcissement.

7. Procédé selon la revendication 6, caractérisé en ce que la température de durcissement, dans le cas des mastics, est de 10 à 120, de préférence de 10 à 80 et en particulier de 15 à 35°C.

8. Procédé selon la revendication 6, caractérisé en ce que la température de durcissement, dans le cas des solutions d'imprégnation, est de 130 à 170°C, de préférence de 130 à 160°C, et que l'on utilise pour le durcissement, en tant que composant C), des durcisseurs latents.

9. Objets moulés initialement poreux, étanches, fabriqués par le procédé selon les revendications 6 et 8, en graphite, céramique ou métal fritté.

Revendications pour l'Etat contractant suivant: AT

1. Procédé pour la préparation de produits de durcissement résistant aux acides, par utilisation de solutions d' imprégnation ou des mastics à base de mélanges de résines époxydes, de résols, de catalyseurs de durcissement et éventuellement de charges, caractérisé en ce que, à des mélanges

    A) d'au moins une résine époxyde bifonctionnelle à faible masse moléculaire ayant une masse équivalente d'époxyde de 87 à 1000 et
    B) d'au moins un résol obtenu à partir d'au moins un phénol trifonctionnel et de formaldéhyde selon une proportion molaire de 1:1 à 1:3, dont la viscosité est de 50 à 2500 mPa.s/20°C et dont la teneur en extrait sec est d'au moins 50 % en poids, on ajoute
    C) un catalyseur de durcissement, auquel cas on ajoute encore aux mastics
    D) des charges selon une proportion pondérale de 1:1 à 1:7, par rapport au total des composants A) à C), B) étant dans chaque cas calculé en tant que résol à 100 %, et on durcit ces mélanges à des températures de 10 à 170°C, les mélanges présents en tant que solutions d'imprégnation étant appliqués sur les objets moulés poreux avant le durcissement.

2. Procédé selon la revendication 1, caractérisé en ce que la proportion molaire, dans le composant B), est de 1:1,3-2,5.

3. Procédé selon les revendications 1 ou 2, caractérisé en ce que la proportion pondérale des composants A) à B) est de 1:99 à 30:70, de préférence de 5:95 à 20:80, par rapport à du résol à 100 %.

4. Procédé selon l'une ou plusieurs des revendications 1 à 3, caractérisé en ce que la quantité du composant C) est de 0,05 à 10, de préférence de 0,2 à 5 % en poids, calculée par rapport à la somme des composants A) à C), et que des charges D) sont eventuellement présents selon une proportion pondérale, entre le total des composants A) à C) et la charge, de 1:1,5 à 1:5, B) étant toujours calculé en tant que résol à 100 %.

5. Procédé selon l'une ou plusieurs des revendications 1 à 4, caractérisé en ce que la température de durcissement est dans le cas des mastics de 10 à 120, de préférence de 10 à 80 et en particulier de 15 à 35°C.

6. Procédé selon l'une ou plusieurs des revendications 1 à 5, caractérisé en ce que la température de durcissement dans le cas des solutions d'imprégnation est de 130 à 170, de préférence de 130 à 160°C, et que l'on utilise pour le durcissement, en tant que composant C), des durcisseurs latents.

7. Procédé selon l'une ou plusieurs des revendications 1 à 6, caractérisé en ce qu'on utilise comme catalyseur de durcissement des acides inorganiques, des sel acides, des acides sulfoniques, leurs chlorures et/ou esters, les esters ayant de 1 à 12 atomes de carbone dans le groupe ester.